(19) Europäisches Patentamt
European Patent Office
Office européen des brevets

(11) **EP 3 716 474 A1**

(12) **EUROPÄISCHE PATENTANMELDUNG**

(43) Veröffentlichungstag:
**30.09.2020 Patentblatt 2020/40**

(51) Int Cl.:
*H02S 40/42* *(2014.01)*      *H02S 50/00* *(2014.01)*

(21) Anmeldenummer: **19165914.3**

(22) Anmeldetag: **28.03.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **BPE e. K.**
**90542 Eckental (DE)**

(72) Erfinder: **Hornig, Wolfgang**
**90542 Eckental (DE)**

(74) Vertreter: **Kaufmann, Sigfrid**
**Kaufmann**
**Patent- und Rechtsanwälte**
**Loschwitzer Straße 42**
**01309 Dresden (DE)**

Bemerkungen:
Geänderte Patentansprüche gemäss Regel 137(2) EPÜ.

(54) **VERFAHREN ZUR STEIGERUNG DES WIRKUNGSGRADES EINER FOTOVOLTAIKANLAGE SOWIE MESSVORRICHTUNG ZUR UNTERSTÜTZUNG DER VERFAHRENSDURCHFÜHRUNG**

(57)     Die Erfindung betrifft ein Verfahren zur Steigerung des Wirkungsgrades einer Fotovoltaikanlage mit mindestens einem kühlbaren Fotovoltaikelement sowie eine die Durchführung des Verfahrens unterstützende Messvorrichtung mittels denen es möglich ist, Fotovoltaikanlagen durch Optimierung der Kühlung an ihre spezifischen Betriebsbedingungen, insbesondere an ihren Betriebsstandort, anzupassen. Zunächst wird die maximale Betriebstemperatur ($T_{max}$) des ungekühlten Fotovoltaikelements standortspezifisch bestimmt. Auf dieser Basis werden anschließend unter Zuhilfenahme einer Effizienzfunktion die voraussichtliche maximale Betriebstemperatur und die voraussichtliche Gesamteffizienz des gekühlten Fotovoltaikelements für verschiedene, am Fotovoltaikelement kontaktierbare Kühlelemente ermittelt. Schließlich wird nach Auswahl des optimalen Kühlelements dieses am Fotovoltaikelement montiert. Das Verfahren, welches ggf. unter Zuhilfenahme der Messvorrichtung durchgeführt wird, eignet sich besonders für die kühltechnische Optimierung neu zu installierender Fotovoltaikanlagen an Betriebsstandorten mit hoher Sonneneinstrahlung.

FIG. 1

EP 3 716 474 A1

**Beschreibung**

Die Erfindung betrifft ein Verfahren zur Steigerung des Wirkungsgrades einer Fotovoltaikanlage mit mindestens einem kühlbaren Fotovoltaikelement sowie eine die Durchführung des Verfahrens unterstützende Messvorrichtung. Das Verfahren eignet sich - ggf. unter Zuhilfenahme der Messvorrichtung - besonders für die kühltechnische Optimierung neu zu installierender Fotovoltaikanlagen an Betriebsstandorten mit hoher Sonneneinstrahlung.

Die Installation von Fotovoltaikanlagen erfolgt nach dem Stand der Technik unter Beachtung der örtlichen auftretenden Solarstrahlung, um eine größtmögliche Stromausbeute zu realisieren. Die Solarstrahlung, auch bekannt als Globalstrahlung, setzt sich zusammen aus der direkten Sonneneinstrahlung sowie der Diffus- bzw. Himmelsstrahlung, die zum Beispiel durch Streuung des Sonnenlichts an Wolken entsteht. Insbesondere durch die direkte Sonneneinstrahlung tritt eine Erwärmung der Fotovoltaikanlagen ein (auch im Winter, d. h. bei geringen Außentemperaturen). Bei intensiver Sonneneinstrahlung, zum Beispiel in Äquatornähe, können sich Fotovoltaikanlagen auf Betriebstemperaturen von 80 °C oder mehr erwärmen.

Es ist bekannt, dass der mittels Fotovoltaikanlagen bzw. der darin verwendeten Fotovoltaikelemente (auch Solarzellen, Fotovoltaikzellen oder fotovoltaische Zellen genannt) erzeugbare Strom neben der Abhängigkeit von der Lichtintensität auch eine Temperaturabhängigkeit zeigt. Mit zunehmender Betriebstemperatur nimmt der Wirkungsgrad bzw. die Stromausbeute ab, sodass eine Erwärmung in der Regel unerwünscht ist. Ab einer Schwellentemperatur, von zum Beispiel 35 °C bei siliziumbasierten Fotovoltaikelementen, tritt ein sogenannter "Voltage Drop" ein, d. h., die mit dem Fotovoltaikelement erzeugte Spannung fällt ab, wobei eine Temperaturerhöhung von 1 °C etwa einen Leistungsverlust von 1 % nach sich ziehen kann. Eine Betriebstemperatur des Fotovoltaikelements von etwa 45 °C würde also einen Leistungsverlust in der Stromerzeugung von etwa 10 % bedeuten. Somit ist ein siliziumbasiertes Fotovoltaikelement nur bei Betriebstemperaturen unterhalb der Schwellentemperatur von etwa 35 °C mit hohem Wirkungsgrad betreibbar.

Um ein zu starkes Erhitzen der Fotovoltaikelemente zu vermeiden, können solche Anlagen gekühlt werden, zum Beispiel durch Hinterlüften der Fotovoltaikelemente, mittels metallischer Kühlkörper oder mittels einer Flüssigkühlung.

DE 10 2004 002 900 A1 beschreibt ein Fotovoltaikmodul, welches mittels einer Kühlflüssigkeit, die durch einen Kühlkreislauf mit einem Wärmetauscher geleitet wird, gekühlt wird, wobei durch die Verwendung von Wasser als Kühlflüssigkeit gleichzeitig Warmwasser gewonnen wird.

Auch die Verwendung von Peltierelementen in Verbindung mit Fotovoltaikelementen ist bekannt. Ein Peltierelement ist ein elektrothermischer Wandler mit zwei Thermoflächen, der - basierend auf dem Peltiereffekt - bei Stromdurchfluss eine Temperaturdifferenz zwischen seinen beiden Thermoflächen erzeugt oder aber - basierend auf dem Seebeckeffekt als Umkehrung des Peltiereffekts - bei Vorliegen einer Temperaturdifferenz zwischen den beiden Thermoflächen einen Stromfluss zwischen zwei entsprechenden Anschlusselektroden des Peltierelements bewirkt. Im letzteren Fall wirkt das Peltierelement als thermoelektrischer Generator.

DE 10 2007 055 462 A1 beschreibt eine Fotovoltaikanlage mit einem Fotovoltaikelement und einem Peltierelement, wobei das Peltierelement durch Anlegen einer elektrischen Spannung zur Kühlung und/oder Beheizung des Fotovoltaikelements verwendet werden kann.

Zusätzlich ergibt sich bei der Energieversorgung mittels Solarvorrichtungen die Problematik starker Schwankungen der erzeugten elektrischen Energie in Abhängigkeit von den Wetterbedingungen. Aus DE 10 2016 116 700 A1 ist ein Verfahren bekannt, das es ermöglicht, Fotovoltaikanlagen mit jahres- bzw. tageszeitlich nur geringer Schwankung der von ihr bereitgestellten elektrischen Energie betreiben zu können.

Die bekannten Maßnahmen zur Kühlung von Fotovoltaikanlagen können sich für einen spezifischen Betriebsstandort zwar eignen, sind jedoch u. U. an einem anderen Betriebsstandort ineffizient oder zu kosten- bzw. wartungsintensiv.

Aufgabe der Erfindung ist es, ein Verfahren zur Steigerung des Wirkungsgrades einer Fotovoltaikanlage bereitzustellen, das es ermöglicht - ggf. unter Zuhilfenahme einer Messvorrichtung -, die Fotovoltaikanlage im Hinblick auf ihre spezifischen Betriebsbedingungen, insbesondere ihren Betriebsstandort, kühltechnisch zu optimieren.

Diese Aufgabe wird durch die Verfahren mit den Merkmalen nach dem Anspruch 1 bzw. Anspruch 7 sowie die Messvorrichtung nach Anspruch 13 gelöst; zweckmäßige Weiterbildungen der Erfindung sind in den Unteransprüchen 2 bis 6, 8 bis 12 sowie 14 und 15 beschrieben.

Nach Maßgabe der Erfindung wird das Verfahren zur Steigerung des Wirkungsgrades einer Fotovoltaikanlage, aufweisend mindestens ein mittels eines thermisch kontaktierbaren Kühlelements temperierbares Fotovoltaikelement, entsprechend der nachfolgend beschriebenen Schritte durchgeführt.

Im ersten Schritt, hier als Analysebetrieb bezeichnet, wird die Fotovoltaikanlage an ihrem vorgesehenen Betriebsstandort zur Analyse des Betriebsverhaltens mit ungekühltem Fotovoltaikelement betrieben. Während dieses Analysebetriebs wird die Betriebstemperatur an der Rückseite des Fotovoltaikelements, zum Beispiel mit Hilfe eines berührenden Temperatursensors, gemessen. Die Messung erfolgt über einen längeren Zeitraum, beispielsweise von Sonnenaufgang bis -untergang, vorzugsweise jedoch über mindestens 24 Stunden. Insbesondere kann vorgesehen sein, die Messungen auch tageszeit- und/oder jahreszeitenabhängig durchzuführen. Die maximale, während des Analysebetriebs aufgetretene Betriebstemperatur ($T_{max}$) des ungekühlten Fotovoltaikelements wird im Rahmen des Analysebetriebs bestimmt.

Basis für die weiteren Verfahrensschritte bildet die Bereitstellung einer Effizienzfunktion des ungekühlten Fotovoltaikelements. Die Effizienz des Fotovoltaikelements ist hierbei als Flächenleistungsdichte des Fotovoltaikelements, d. h. die erzeugte elektrischen Leistung je Fläche des Fotovoltaikelements, bezogen auf den Wert der Globalstrahlung, d. h. die Bestrahlungsstärke der auf eine horizontale Empfangsfläche auftreffenden Solarstrahlung, definiert. Die Effizienzfunktion beschreibt den Zusammenhang zwischen der Effizienz des Fotovoltaikelements und der Betriebstemperatur des Fotovoltaikelements. Die Effizienz fällt bei herkömmlichen Fotovoltaikelementen mit steigender Betriebstemperatur ab; die Effizienzfunktion ist beispielsweise als Exponentialfunktion darstellbar.

Im nächsten Schritt wird eine kritische Temperatur ($T_c$) auf Basis einer vorgegebenen Mindesteffizienz und der Effizienzfunktion festgelegt. Die Mindesteffizienz wird auf Basis der am Standort verfügbaren bzw. vorgesehenen Fläche der Fotovoltaikanlage und der benötigten Leistung definiert. Für siliziumbasierte Fotovoltaikelemente wird die kritische Temperatur vorzugsweise auf 35 °C festgelegt.

In einem weiteren Schritt erfolgt die Berechnung der voraussichtlichen maximalen Betriebstemperatur des gekühlten Fotovoltaikelements auf Basis der maximalen, während des Analysebetriebs aufgetretenen Betriebstemperatur des ungekühlten Fotovoltaikelements unter Berücksichtigung einer Kühlwirkung verschiedener am Fotovoltaikelement kontaktierbarer Kühlelemente. Diese Berechnung erfolgt für mindestens eines, vorzugsweise jedoch für alle der folgenden Kühlelemente: eine Kühlplatte aus wärmeleitfähigem Metall, ein passiv oder ein aktiv betreibbares Peltierelement und/oder einen ein flüssiges Kühlmittel (vorzugsweise Wasser) beinhaltenden Kühlbehälter. Das Kühlmittel kann zum Beispiel das Wasser sein, in dem das Fotovoltaikelement bzw. die Fotovoltaikanlage schwimmt.

Die Berechnung kann für den Fall der Anwendung nur eines der genannten Kühlelemente am Fotovoltaikelement, aber auch für eine kombinierte Anwendung wenigstens zweier Kühlelemente am selben Fotovoltaikelement, erfolgen.

Weiterhin wird die voraussichtliche Gesamteffizienz des gekühlten Fotovoltaikelements auf Basis der Effizienzfunktion des ungekühlten Fotovoltaikelements unter Berücksichtigung der Effizienzsenkung oder -erhöhung durch das Kühlelement berechnet. D. h., für die Gesamteffizienz wird zum Beispiel der Energiebedarf des aktiven Peltierelements als Effizienzsenkung und der Energiegewinn des passiven Peltierelement aus der Abwärme des Fotovoltaikelements als Effizienzerhöhung berücksichtigt.

Im folgenden Schritt wird dasjenige Kühlelement, d. h. die Kühlplatte, das passiv betreibbare Peltierelement, das aktiv betreibbare Peltierelement und/oder der das flüssige Kühlmittel beinhaltende Kühlbehälter bzw. diejenige Kombination von Kühlelementen ausgewählt, für welches

a) die voraussichtliche maximale Betriebstemperatur des gekühlten Fotovoltaikelements kleiner als die kritische Temperatur ist, und

b) die voraussichtliche Gesamteffizienz des gekühlten Fotovoltaikelements wenigstens 10 % über der nach der Effizienzfunktion am Punkt der kritischen Temperatur vorliegenden Effizienz liegt, und

c) die voraussichtliche maximale Betriebstemperatur des gekühlten Fotovoltaikelements der kritischen Temperatur am nächsten liegt.

Schließlich wird das so ausgewählte Kühlelement bzw. die Kombination von Kühlelementen am Fotovoltaikelement montiert. Bei mehreren Fotovoltaikelementen wird jedes der Fotovoltaikelemente jeweils mit dem ausgewählten Kühlelement bzw. der Kombination von Kühlelementen ausgestattet.

Mittels des erfindungsgemäßen Verfahrens lassen sich die erforderliche Kühllösung und/oder die erreichbare Energieausbeute einer Fotovoltaikanlage für einen spezifischen Betriebsstandort ermitteln.

Ein besonderer Vorteil des Verfahrens ist es, dass die gezielte Auswahl des Kühlelements für das Fotovoltaikelement spezifisch für den Betriebsstandort erfolgt und somit eine auf die gegebenen Betriebsbedingungen kühltechnisch optimal ausgerüstete Fotovoltaikanlage bereitgestellt wird.

Einerseits wird nämlich durch das Verfahren - aufgrund der Auswahl des Kühlelements - erreicht, dass die Fotovoltaikanlage nicht in einem ineffizienten, höheren Betriebstemperaturbereich betrieben wird; und andererseits werden lediglich die für den Standort notwendigen Kühlelemente installiert. Kostenintensivere bzw. wartungsaufwendigere Kühlelemente werden mittels des Verfahrens nur bei tatsächlichem Bedarf ausgewählt.

In einem zusätzlichen, optionalen Schritt kann das Messen der Betriebstemperatur zur Analyse des Betriebsverhaltens bei Betrieb der Fotovoltaikanlage mit gekühltem Fotovoltaikelement erfolgen. Dies dient zum Beispiel der Verifizierung der Messungen und Berechnungen.

Weiterhin kann die Messung der Betriebstemperatur bei Analysebetrieb in Abhängigkeit der Tageszeit erfolgen; somit ist die voraussichtliche maximale Betriebstemperatur und auch die voraussichtlichen Gesamteffizienz des gekühlten Fotovoltaikelements tageszeitabhängig berechenbar.

Soweit die Messung der Betriebstemperatur des ungekühlten Fotovoltaikelements und Berechnung der voraussichtlichen Gesamteffizienz des gekühlten Fotovoltaikelements über einen Zeitraum von 24 Stunden erfolgt, kann vorgesehen sein, dass zur Berechnung der Gesamteffizienz des gekühlten Fotovoltaikelements, das mit einem als Peltierelement ausgebildetem Kühlelement versehen ist, die Effizienzerhöhung aufgrund der Energieerzeugung während der Zeit ohne Sonneneinstrahlung berücksichtigt wird. Besonders in Wüstengebieten kommt es während des Tages zur starken Aufheizung des Bodens. Die gespeicherte Wärme wird während der Nachtzeit abgestrahlt, kann vom Peltierelement in elektrischen Strom umgewandelt werden und somit zur Steigerung der Gesamteffizienz des gekühlten Fotovoltaikelements beitragen.

Die Bestimmung der Effizienzfunktion kann - sofern diese nicht vorbekannt ist - durch Messung der erzeugten elektrischen Leistung bzw. der elektrischen Spannung und Messung des Wertes der Globalstrahlung mittels eines Globalstrahlungssensors im Rahmen des Analysebetriebs erfolgen. Aus den Messdaten werden die Flächenleistungsdichte des Fotovoltaikelements und der dieser zugeordnete Wert der Globalstrahlung bestimmt; aus diesen Daten wiederum wird mit geeigneten mathematischen Methoden, zum Beispiel durch Regression oder Kurvenanpassung, die Effizienzfunktion ermittelt. Zur Feinjustierung der Daten und der daraus ermittelten Effizienzfunktion können ferner die Lufttemperatur, gemessen mittels eines Lufttemperatursensors, und die atmosphärische Extinktion, gemessen mittels eines Lidars (Abkürzung für Englisch: light detection and ranging), berücksichtigt werden. Somit ist es beispielsweise möglich, die ermitteln Daten zu korrigieren, um systematische, durch die Messungen erfassbare Einflüsse, wie zum Beispiel Varianzen der aerosoloptischen Dichte oder wetterbedingte Phänomene, die zu höheren Datenstreuungen führen, auszuklammern.

Das erfindungsgemäße Verfahren zur Steigerung des Wirkungsgrades einer Fotovoltaikanlage, aufweisend mindestens ein mittels eines thermisch kontaktierbaren Kühlelements temperierbares Fotovoltaikelement, kann unter Zuhilfenahme einer Messvorrichtung durchgeführt werden.

Die Messvorrichtung umfasst hierzu mindestens ein kühlbares Messvorrichtungsfotovoltaikelement, das jeweils thermisch mit einem Messvorrichtungstemperatursensor und einem Messvorrichtungskühlelement kontaktiert ist, sowie vorzugsweise einen Messvorrichtungsglobalstrahlungssensor zur Messung des Wertes der Globalstrahlung.

In einer Ausführung besitzt die Messvorrichtung als Messvorrichtungskühlelement eine Messvorrichtungskühlplatte aus wärmeleitfähigem Metall, ein passiv oder aktiv betreibbares Messvorrichtungspeltierelement und/oder einen ein flüssiges Messvorrichtungskühlmittel beinhaltenden Messvorrichtungskühlbehälter.

In einer bevorzugten Ausgestaltung der Messvorrichtung umfasst diese drei Messvorrichtungsfotovoltaikelemente, wobei das erste Messvorrichtungsfotovoltaikelement mit einer Messvorrichtungskühlplatte aus wärmeleitfähigem Metall, das zweite Messvorrichtungsfotovoltaikelement mit einem passiv oder aktiv betreibbaren Messvorrichtungspeltierelement und das dritte Messvorrichtungsfotovoltaikelement mit einem in einem Messvorrichtungskühlbehälter befindlichen flüssigen Messvorrichtungskühlmittel thermisch kontaktiert ist.

Vorteilhafterweise wird die Messvorrichtung eingesetzt, um mittels des Verfahrens zur Steigerung des Wirkungsgrades für eine noch aufzubauende Fotovoltaikanlage eine geeignete Kühllösung zu ermitteln.

Die Messvorrichtung wird mit ungekühltem Messvorrichtungsfotovoltaikelement, dass vorzugsweise typgleich zu dem oder den Fotovoltaikelementen der Fotovoltaikanlage ist, an einem vorgesehenen Betriebsstandort der Fotovoltaikanlage zur Prognose des Betriebsverhaltens betrieben. Während dieses Prognosebetriebs wird die Betriebstemperatur, zum Beispiel mit Hilfe eines berührenden Messvorrichtungstemperatursensors, an der Rückseite des Messvorrichtungsfotovoltaikelements gemessen. Die maximale, während des Prognosebetriebs aufgetrete Betriebstemperatur des ungekühlten Messvorrichtungsfotovoltaikelements wird im Rahmen des Prognosebetriebs bestimmt.

Die nächsten Schritte erfolgen äquivalent zum bereits oben beschriebenen Verfahren:
Zunächst wird die Effizienzfunktion des Messvorrichtungsfotovoltaikelements bereitgestellt, die die Flächenleistungsdichte des Messvorrichtungsfotovoltaikelements bezogen auf den Wert der Globalstrahlung als Funktion der Betriebstemperatur des Messvorrichtungsfotovoltaikelements angibt.

Anschließend erfolgt die Festlegung einer kritischen Temperatur auf Basis einer vorgegebenen Mindesteffizienz und der Effizienzfunktion. Für ein siliziumbasiertes Messvorrichtungsfotovoltaikelement wird die kritische Temperatur vorzugsweise auf 35 °C festgelegt.

Im nächsten Schritt wird die voraussichtliche maximale Betriebstemperatur des gekühlten Messvorrichtungsfotovoltaikelements auf Basis der maximalen, während des Prognosebetriebs aufgetreten Betriebstemperatur des ungekühlten Messvorrichtungsfotovoltaikelements unter Berücksichtigung einer Kühlwirkung verschiedener am Messvorrichtungsfotovoltaikelement kontaktierbarer Messvorrichtungskühlelemente berechnet. Diese Berechnung erfolgt für mindestens eines, vorzugsweise jedoch für alle der folgenden Messvorrichtungskühlelemente: eine Messvorrichtungskühlplatte aus wärmeleitfähigem Metall, ein passiv oder ein aktiv betreibbares Messvorrichtungspeltierelement und/oder einen ein flüssiges Messvorrichtungskühlmittel (vorzugsweise Wasser) beinhaltenden Messvorrichtungskühlbehälter. Die Berechnung kann für den Fall der Anwendung nur eines der genannten Messvorrichtungskühlelemente am Messvorrichtungsfotovoltaikelement, aber auch für eine kombinierte Anwendung wenigstens zweier Messvorrichtungskühlelemente am selben Messvorrichtungsfotovoltaikelement, erfolgen.

Nachfolgend wird die voraussichtliche Gesamteffizienz des gekühlten Messvorrichtungsfotovoltaikelements auf Basis der Effizienzfunktion des Messvorrichtungsfotovoltaikelements unter Berücksichtigung der Effizienzsenkung oder -erhöhung durch das Messvorrichtungskühlelement berechnet.

Im folgenden Schritt wird dasjenige Messvorrichtungskühlelement, d. h. die Messvorrichtungskühlplatte, das passiv betreibbare Messvorrichtungspeltierelement, das aktiv betreibbare Messvorrichtungspeltierelement und/oder der das flüssige Messvorrichtungskühlmittel beinhaltende Messvorrichtungskühlbehälter bzw. diejenige Kombination von Messvorrichtungskühlelementen ausgewählt, für welches

a) die voraussichtliche maximale Betriebstemperatur des gekühlten Messvorrichtungsfotovoltaikelements kleiner als die kritische Temperatur ist, und
b) die voraussichtliche Gesamteffizienz des gekühlten Messvorrichtungsfotovoltaikelements wenigstens 10 % über der nach der Effizienzfunktion am Punkt der kritischen Temperatur vorliegenden Effizienz liegt, und
c) die voraussichtliche maximale Betriebstemperatur des gekühlten Messvorrichtungsfotovoltaikelements der kritischen Temperatur am nächsten liegt.

Schließlich wird das Kühlelement am Fotovoltaikelement der Fotovoltaikanlage montiert, wobei das Kühlelement typgleich zu dem des ausgewählten Messvorrichtungskühlelements ist. D. h., wenn im vorangegangenen Schritt als favorisiertes Messvorrichtungskühlelement die Messvorrichtungskühlplatte ausgewählt wurde, wird am Fotovoltaikelement eine entsprechende Kühlplatte installiert; wenn das passiv betreibbare Messvorrichtungspeltierelement ausgewählt wurde, wird ein entsprechendes passiv betreibbares Peltierelement installiert; wenn das aktiv betreibbare Messvorrichtungspeltierelement ausgewählt wurde, wird ein entsprechendes aktiv betreibbares Peltierelement installiert; und/oder wenn der das flüssige Messvorrichtungskühlmittel beinhaltende Messvorrichtungskühlbehälter ausgewählt wurde, wird ein entsprechender, ein flüssiges Kühlmittel beinhaltender Kühlbehälter installiert. Bei mehreren Fotovoltaikelementen wird jedes der Fotovoltaikelemente jeweils mit dem ausgewählten Kühlelement bzw. der Kombination von Kühlelementen ausgestattet.

Es kann vorgesehen sein, dass als zusätzlicher, optionaler Schritt das Messen der Betriebstemperatur zur Prognose des Betriebsverhaltens bei Betrieb der Messvorrichtung mit gekühltem Messvorrichtungsfotovoltaikelement erfolgt.

Ferner kann die Auswahl des Kühlelementes oder der Kühlelemente bzw. des Fotovoltaikelements oder der Fotovoltaikelemente der Fotovoltaikanlage auf Basis der Messungen der Messvorrichtung unter Berücksichtigung des Typs und der Größe, einschließlich der Fläche, des Fotovoltaikelements oder der Fotovoltaikelemente der Fotovoltaikanlage erfolgen. D. h., Unterschiede zwischen Messvorrichtung und Fotovoltaikanlage gehen auf diese Weise als Eingangsparameter in die Auswahlentscheidung der Fotovoltaikelemente der Fotovoltaikanlage ein.

Vorteilhafterweise wird die Messvorrichtung in regelmäßigen Abständen mittels einer Kalbrierfotovoltaikanlage kalibriert, um die hinterlegte Effizienzfunktion zu optimieren oder der Messvorrichtung nach baulichen Veränderungen einzumessen.

Für siliziumbasierte Fotovoltaikelemente bzw. siliziumbasierte Messfotovoltaikelemente kann die Effizienz mittels der Effizienzfunktion:

$$\text{Effizienz} = 35 \cdot 10^3 \cdot e^{-75 \cdot \frac{\text{Betriebstempertur [K]}}{\text{Schmelztempertur Si [K]}}} = 35 \cdot 10^3 \cdot e^{-75 \cdot \frac{\text{Betriebstempertur [K]}}{1956,15 \text{ K}}}$$

berechnet werden.

Die Erfindung ist nachfolgend anhand eines Ausführungsbeispiels und mit Bezug auf die schematischen Zeichnungen näher erläutert. Dazu zeigen

Fig. 1       eine bevorzugte Ausführung der Messvorrichtung partiell in der Schnittansicht und partiell in perspektivischer Ansicht,

Fig. 2       die Effizienzfunktion mit Streubereich in Diagrammform, und

Fig. 3 - 6       den schematischer Verfahrensablauf anhand von Effizienz-Betriebstemperatur-Diagrammen.

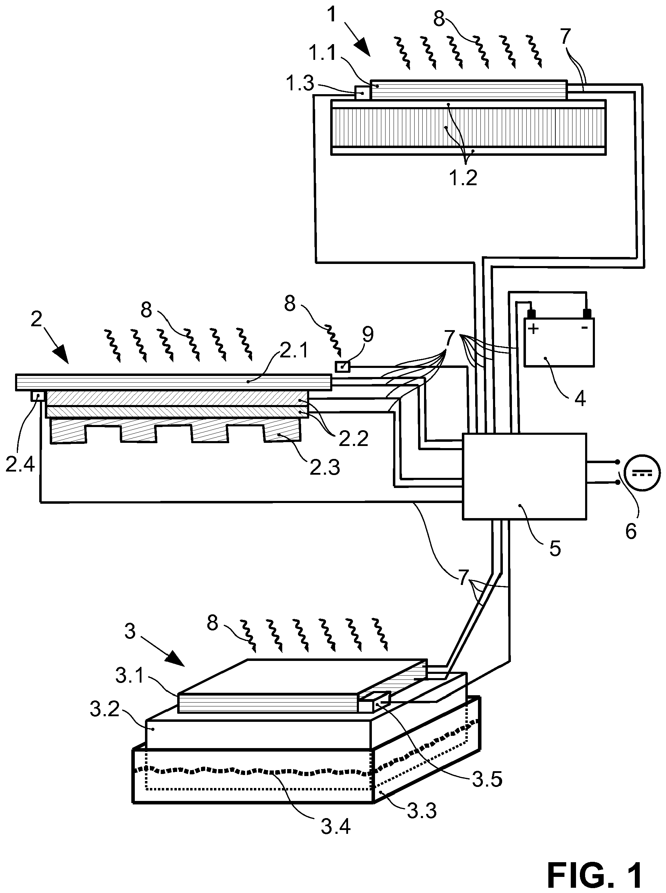

Die Messvorrichtung nach der Fig. 1 besitzt drei, der Globalstrahlung 8 ausgesetzte Messmodule 1, 2, 3, nämlich das erste Messmodul 1, das zweite Messmodul 2 sowie das dritte Messmodul 3, die über die Strom- und Datenleitungen 7 mit der Mess- und Steuerungseinheit 5 verbunden sind. Die Mess- und Steuerungseinheit 5 dient u. a. zu Analyse und Speicherung der von den Messmodulen 1, 2, 3 gelieferten Messdaten; die Mess- und Analysedaten können in allgemein bekannter Weise über geeignete Mittel visualisiert oder über Schnittstellen exportiert werden.

Das erste Messmodul 1 weist das erste Messvorrichtungsfotovoltaikelement 1.1, die Messvorrichtungskühlplatte 1.2 sowie den ersten, am ersten Messvorrichtungsfotovoltaikelement 1.1 kontaktierten Messvorrichtungstemperatursensor 1.3 auf, wobei die Messvorrichtungskühlplatte 1.2 eine Aluminiumplatte in Sandwichbauweise ist.

Das zweite Messmodul 2 umfasst das zweite Messvorrichtungsfotovoltaikelement 2.1, das Messvorrichtungspeltierelement 2.2 sowie eine Messvorrichtungspeltierelement-Kühlplatte 2.3, die als Wärmesenke für das Messvorrichtungspeltierelement 2.2 dient. Der zweite Messvorrichtungstemperatursensor 2.4 ist am zweiten Messvorrichtungsfotovoltaikelement 2.1 kontaktiert.

Das in der Fig. 1 der besseren Anschaulichkeit halber in perspektivischer Ansicht dargestellte dritte Messmodul 3 besitzt das dritte Messvorrichtungsfotovoltaikelement 3.1 mit dem hieran kontaktierten dritten Messvorrichtungstemperatursensor 3.5, einen flächig thermisch mit dem dritten Messvorrichtungsfotovoltaikelement 3.1 verbundenen Wärmeleitkörper 3.2 sowie einen mit dem Messvorrichtungskühlmittel 3.4 gefüllten Messvorrichtungskühlbehälter 3.3. Der Wärmeleitkörper 3.2 taucht in das Messvorrichtungskühlmittel 3.4 ein; er besteht aus einem Werkstoff hoher Wärmeleitfähigkeit, zum Beispiel einem Kupfer- oder Aluminiumwerkstoff. Optional kann der Wärmeleitkörper 3.2 entfallen, wobei dann das Messvorrichtungskühlmittel 3.4 das dritte Messvorrichtungsfotovoltaikelement 3.1 direkt kontaktiert. Als Messvorrichtungskühlmittel 3.4 ist Wasser vorgesehen.

Der Messvorrichtungsglobalstrahlungssensor 9 ist direkt mit der Mess- und Steuerungseinheit 5 verbunden und kann beliebig im Bereich eines der Messmodule 1, 2, 3, d. h. zum Beispiel neben oder zwischen diesen, positioniert werden.

Die Messvorrichtungsfotovoltaikelemente 1.1, 2.1, 3.1 sind jeweils siliziumbasierte Fotovoltaikelemente, deren kritische Temperatur $T_c$ auf 35 °C festgelegt ist.

Die Messvorrichtung weist zudem den über die Stromleitungen 7 mit der Mess- und Steuerungseinheit 5 verbundenen Akkumulator 4 zur Speicherung elektrischer Energie sowie die (optionale) Gleichstrom-Abnahmestelle 6 auf, an der zum Beispiel zu Test- oder Erprobungszwecken elektrische Verbraucher anschließbar sind.

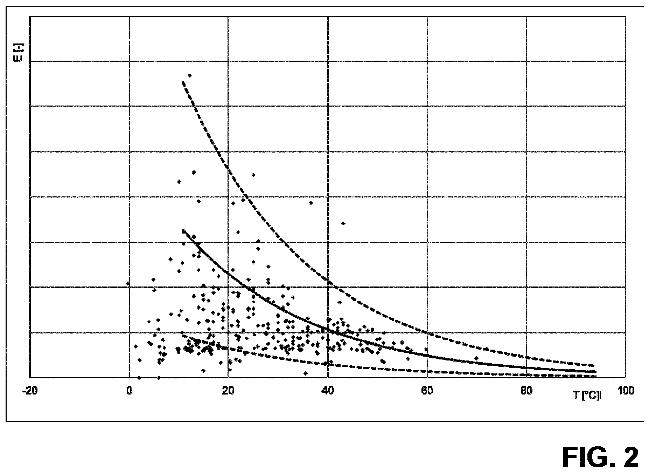

Die Darstellung gemäß der Fig. 2 zeigt beispielhaft die Effizienzfunktion als durchgezogene Kurve im Effizienz-Betriebstemperatur-Diagramm mit zwei zusätzlichen, gestrichelten Kurven, die den Streubereich der Effizienzfunktion visualisieren. Zudem sind Effizienz-Betriebstemperatur-Daten angegeben, die im Rahmen des Betriebes einer Fotovoltaikanlage im Langzeitbetrieb über mehrere Jahre ermittelt wurden.

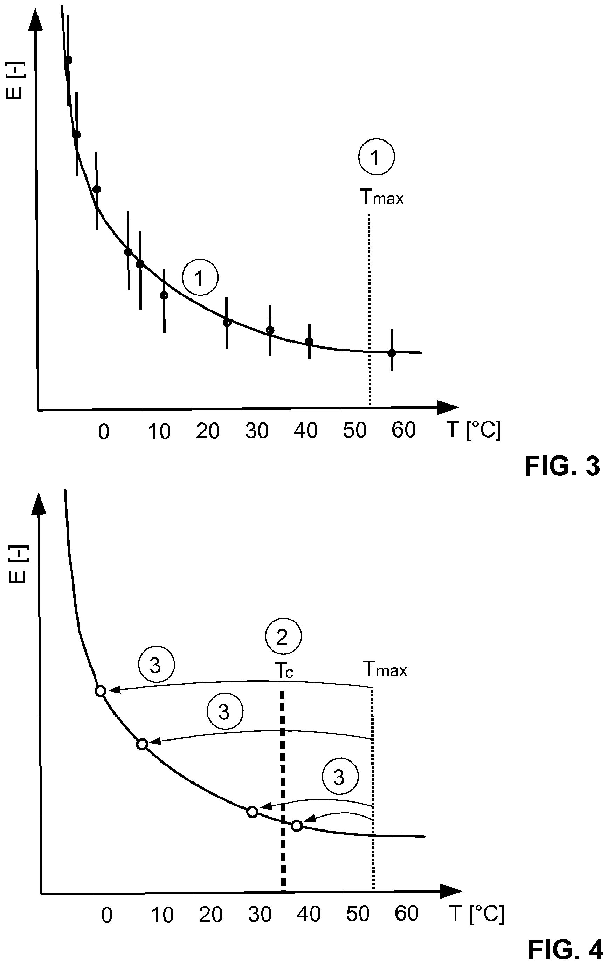

Die Fig. 3 bis 6 erläutern anhand von Effizienz-Betriebstemperatur-Diagrammen den Verfahrensablauf zur Auswahl des optimalen Kühlelements für die Fotovoltaikelemente einer Fotovoltaikanlage.

Gemäß der Fig. 3 werden zunächst im Rahmen des Analysebetriebs die maximale Betriebstemperatur $T_{max}$ und die Effizienzfunktion aus gemessenen Leistungs- und Globalstrahlungsmessdaten bestimmt (①). Alternativ kann eine für das spezifische Fotovoltaikelement vorbekannte Effizienzfunktion bereitgestellt werden.

Nachfolgend wird - siehe Fig. 4 - die kritische Temperatur $T_c$ festgelegt (②).

Im nächsten Schritt werden für verschiedenen Kühlelemente - auf Basis ihrer jeweiligen Kühlwirkung - die erreichbare Absenkung der maximalen Betriebstemperatur bzw. die voraussichtliche maximale Betriebstemperatur des gekühlten Fotovoltaikelements bestimmt (③). Die hierbei erzielbare Effizienz E des Fotovoltaikelements entsprechend der Effizienzfunktion wird durch die weißen Punkte mit schwarzer Umrandung auf der Kurvendarstellung der Effizienzfunktion wiedergegeben.

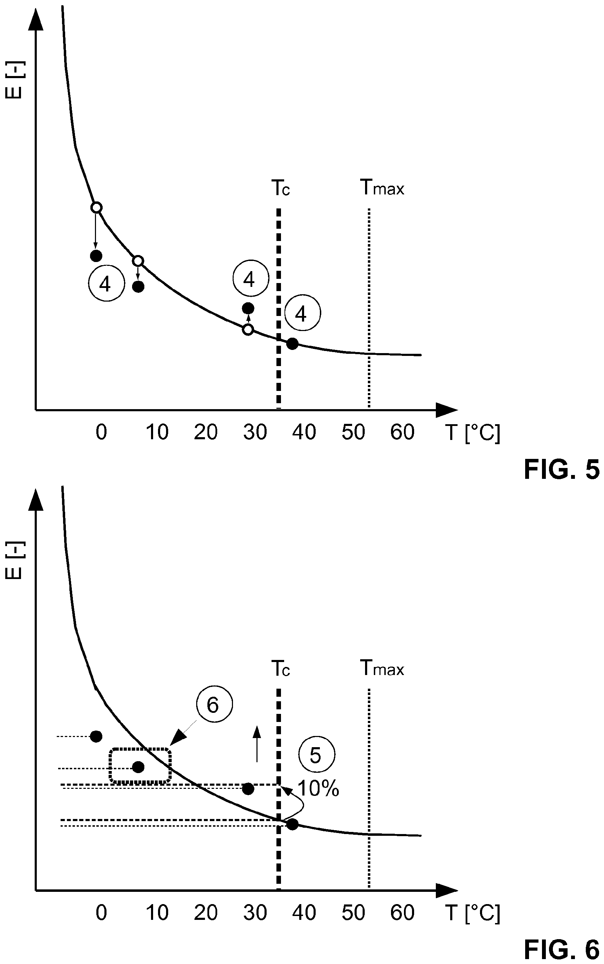

Die voraussichtliche Gesamteffizienz wird - siehe Fig. 5 - auf Basis der Effizienz des Fotovoltaikelements (weiße Punkte mit schwarze Umrandung) und der Effizienzsenkung oder -erhöhung durch das Kühlelement ermittelt (dargestellt durch gefüllte schwarze Punkte im Effizienz-Betriebstemperatur-Diagramm, ④). Ein Energieverbrauch des Kühlelements, zum Beispiel im Fall eines aktiven Peltierelements als Kühlelement, führt zu einer Effizienzsenkung; die Erzeugung von zusätzlicher Energie durch das Kühlelement, zum Beispiel mittels eines passiven Peltierelements aus der Abwärme des Fotovoltaikelements führt zu einer Effizienzerhöhung, da bei gleicher Globalstrahlung mehr Leistung je Fläche durch das gekühlte Fotovoltaikelement abgegeben wird.

Anschließend wird - siehe Fig. 6 - die Effizienz E gemäß der Effizienzfunktion bei der kritischen Temperatur $T_c$ ermittelt und darauf basierend der um 10 % höher liegende Schwellwert bestimmt (⑤).

Für die Auswahl des für den spezifischen Standort optimalen Kühlelements werden nur die Datenpunkte der voraussichtlichen maximalen Betriebstemperatur und der voraussichtlichen Gesamteffizienz des gekühlten Fotovoltaikelements (schwarze Punkte) berücksichtigt, die über dem 10 %-Schwellwert und unterhalb der kritischen Temperatur $T_c$ liegen. Der Datenpunkt, dessen voraussichtliche maximale Betriebstemperatur der kritischen Temperatur $T_c$ am nächsten liegt, definiert das ausgewählte Kühlelement (⑥), das am Fotovoltaikelement montiert wird.

**Liste der verwendeten Bezugszeichen**

1     erstes Messmodul
1.1     erstes Messvorrichtungsfotovoltaikelement

| 1.2 | Messvorrichtungskühlplatte |
|---|---|
| 1.3 | erster Messvorrichtungstemperatursensor |
| 2 | zweites Messmodul |
| 2.1 | zweites Messvorrichtungsfotovoltaikelement |
| 2.2 | Messvorrichtungspeltierelement |
| 2.3 | Messvorrichtungspeltierelement-Kühlkörper |
| 2.4 | zweiter Messvorrichtungstemperatursensor |
| 3 | drittes Messmodul |
| 3.1 | drittes Messvorrichtungsfotovoltaikelement |
| 3.2 | Wärmeleitkörper |
| 3.3 | Messvorrichtungskühlbehälter |
| 3.4 | Messvorrichtungskühlmittel |
| 3.5 | dritter Messvorrichtungstemperatursensor |
| 4 | Akkumulator zur Speicherung elektrischer Energie |
| 5 | Mess- und Steuerungseinheit |
| 6 | Gleichstrom-Abnahmestelle |
| 7 | Strom- und Datenleitung |
| 8 | Globalstrahlung |
| 9 | Messvorrichtungsglobalstrahlungssensor |
| $T_c$ | kritische Temperatur |
| $T_{max}$ | maximale Betriebstemperatur (ungekühlt) |
| E | Effizienz |

**Patentansprüche**

1. Verfahren zur Steigerung des Wirkungsgrades einer Fotovoltaikanlage, aufweisend mindestens ein mittels eines thermisch kontaktierbaren Kühlelements temperierbares Fotovoltaikelement, **gekennzeichnet durch** die folgenden Schritte:

(1) Betreiben der Fotovoltaikanlage mit ungekühltem Fotovoltaikelement an einem vorgesehenen Betriebsstandort zur Analyse des Betriebsverhaltens, Messen der Betriebstemperatur des Fotovoltaikelements während dieses Analysebetriebs an der Rückseite des Fotovoltaikelements und Bestimmen der maximalen, während des Analysebetriebs aufgetretenen Betriebstemperatur ($T_{max}$) des ungekühlten Fotovoltaikelements,

(2) Bereitstellen einer Effizienzfunktion, die die Flächenleistungsdichte des Fotovoltaikelements bezogen auf den Wert der Globalstrahlung (8) als Funktion der Betriebstemperatur des Fotovoltaikelements angibt,

(3) Festlegen einer kritischen Temperatur ($T_c$) auf Basis einer vorgegebenen Mindesteffizienz und der Effizienzfunktion,

(4) Berechnung der voraussichtlichen maximalen Betriebstemperatur des gekühlten Fotovoltaikelements auf Basis der maximalen, während des Analysebetriebs aufgetretenen Betriebstemperatur ($T_{max}$) des ungekühlten Fotovoltaikelements unter Berücksichtigung einer Kühlwirkung verschiedener am Fotovoltaikelement kontaktierbarer Kühlelemente, umfassend eine Kühlplatte aus wärmeleitfähigem Metall, ein passiv oder aktiv betreibbares Peltierelement und/oder einen ein flüssiges Kühlmittel beinhaltenden Kühlbehälter,

(5) Berechnung der voraussichtlichen Gesamteffizienz des gekühlten Fotovoltaikelements auf Basis der Effizienzfunktion des ungekühlten Fotovoltaikelements unter Berücksichtigung der Effizienzsenkung oder -erhöhung durch das Kühlelement,

(6) Auswählen des Kühlelements, bei dem

- die voraussichtliche maximale Betriebstemperatur des gekühlten Fotovoltaikelements kleiner als die kritische Temperatur ($T_c$) ist, und
- die voraussichtliche Gesamteffizienz des gekühlten Fotovoltaikelements wenigstens 10 % über der nach der Effizienzfunktion am Punkt der kritischen Temperatur ($T_c$) vorliegenden Effizienz (E) liegt, und
- die voraussichtliche maximale Betriebstemperatur des gekühlten Fotovoltaikelements der kritischen Temperatur ($T_c$) am nächsten liegt,

(7) Montieren des ausgewählten Kühlelements am Fotovoltaikelement.

2. Verfahren nach Anspruch 1, **dadurch gekennzeichnet, dass** das Messen der Betriebstemperatur zur Analyse des Betriebsverhaltens in einem zusätzlichen Schritt bei Betrieb der Fotovoltaikanlage mit gekühltem Fotovoltaikelement erfolgt.

3. Verfahren nach Anspruch 1 oder 2, **dadurch gekennzeichnet, dass** die Messung der Betriebstemperatur bei Analysebetrieb sowie die Berechnungen der voraussichtlichen maximalen Betriebstemperatur und der voraussichtlichen Gesamteffizienz des gekühlten Fotovoltaikelements in Abhängigkeit der Tageszeit erfolgen.

4. Verfahren nach Anspruch 1 oder 2, **dadurch gekennzeichnet, dass** die Messung der Betriebstemperatur des ungekühlten Fotovoltaikelements und die Berechnung der voraussichtlichen Gesamteffizienz des gekühlten Fotovoltaikelements über einen Zeitraum von 24 Stunden erfolgen, wobei die Effizienzerhöhung aufgrund der Energieerzeugung des als Peltierelement ausgeführten Kühlelements während der Zeit ohne Sonneneinstrahlung berücksichtigt wird.

5. Verfahren nach einem der Ansprüche 1 bis 5, **dadurch gekennzeichnet, dass** die Bestimmung der Effizienzfunktion auf Basis von Daten der Flächenleistungsdichte des Fotovoltaikelements und der Werte der Globalstrahlung (8) erfolgt, die auf Basis der Messung der vom Fotovoltaikelement erzeugten elektrischen Leistung und/oder elektrischen Spannung sowie des mittels eines Globalstrahlungssensors gemessenen Wertes der Globalstrahlung (8) ermittelt werden.

6. Verfahren nach Anspruch 5, **dadurch gekennzeichnet, dass** ferner die Lufttemperatur, gemessen mittels eines Lufttemperatursensors, und die atmosphärische Extinktion, gemessen mittels eines Lidars, bei Bestimmung der Effizienzfunktion berücksichtigt werden.

7. Verfahren zur Steigerung des Wirkungsgrades einer Fotovoltaikanlage, aufweisend mindestens ein mittels eines thermisch kontaktierbaren Kühlelements temperierbares Fotovoltaikelement, unter Zuhilfenahme einer Messvorrichtung, aufweisend mindestens ein kühlbares Messvorrichtungsfotovoltaikelement (1.1, 2.1, 3.1), **gekennzeichnet durch** die folgenden Schritte:

(1) Betreiben der Messvorrichtung mit ungekühltem Messvorrichtungsfotovoltaikelement (1.1, 2.1, 3.1) an einem vorgesehenen Betriebsstandort der Fotovoltaikanlage zur Prognose des Betriebsverhaltens, Messen der Betriebstemperatur des Messvorrichtungsfotovoltaikelements (1.1, 2.1, 3.1) während dieses Prognosebetriebs an der Rückseite des Messvorrichtungsfotovoltaikelements (1.1, 2.1, 3.1) und Bestimmen der maximalen, während des Prognosebetriebs aufgetretenen Betriebstemperatur ($T_{max}$) des ungekühlten Messvorrichtungsfotovoltaikelements (1.1, 2.1, 3.1),

(2) Bereitstellen einer Effizienzfunktion, die die Flächenleistungsdichte des Messvorrichtungsfotovoltaikelements (1.1, 2.1, 3.1) bezogen auf den Wert der Globalstrahlung (8) als Funktion der Betriebstemperatur des Messvorrichtungsfotovoltaikelements (1.1, 2.1, 3.1) angibt,

(3) Festlegen einer kritischen Temperatur ($T_c$) auf Basis einer vorgegebenen Mindesteffizienz und der Effizienzfunktion,

(4) Berechnung der voraussichtlichen maximalen Betriebstemperatur des gekühlten Messvorrichtungsfotovoltaikelements (1.1, 2.1, 3.1) auf Basis der maximalen, während des Prognosebetriebs aufgetretenen Betriebstemperatur ($T_{max}$) des ungekühlten Messvorrichtungsfotovoltaikelements (1.1, 2.1, 3.1) unter Berücksichtigung einer Kühlwirkung verschiedener am Messvorrichtungsfotovoltaikelement (1.1, 2.1, 3.1) kontaktierbarer Messvorrichtungskühlelemente (1.2, 2.2, 3.3, 3.4), umfassend eine Messvorrichtungskühlplatte (1.2) aus wärmeleitfähigem Metall, ein passiv oder aktiv betreibbares Messvorrichtungspeltierelement (2.2) und/oder einen ein flüssiges Messvorrichtungskühlmittel (3.4) beinhaltenden Messvorrichtungskühlbehälter (3.3),

(5) Berechnung der voraussichtlichen Gesamteffizienz des gekühlten Messvorrichtungsfotovoltaikelements (1.1, 2.1, 3.1) auf Basis der Effizienzfunktion des Messvorrichtungsfotovoltaikelements (1.1, 2.1, 3.1) unter Berücksichtigung der Effizienzsenkung oder -erhöhung durch das Messvorrichtungskühlelement (1.2, 2.2, 3.3, 3.4),

(6) Auswählen des Messvorrichtungskühlelements (1.2, 2.2, 3.3, 3.4), bei dem

- die voraussichtliche maximale Betriebstemperatur des gekühlten Messvorrichtungsfotovoltaikelements (1.1, 2.1, 3.1) kleiner als die kritische Temperatur ($T_c$) ist, und
- die voraussichtliche Gesamteffizienz des gekühlten Messvorrichtungsfotovoltaikelements (1.1, 2.1, 3.1) wenigstens 10 % über der nach der Effizienzfunktion am Punkt der kritischen Temperatur ($T_c$) vorliegenden Effizienz (E) liegt, und
- die voraussichtliche maximale Betriebstemperatur des gekühlten Messvorrichtungsfotovoltaikelements (1.1, 2.1, 3.1) der kritischen Temperatur ($T_c$) am nächsten liegt,

(7) Montieren des Kühlelements am Fotovoltaikelement der Fotovoltaikanlage, wobei das Kühlelement typgleich zu dem des ausgewählten Messvorrichtungskühlelements (1.1, 2.1, 3.1) ist.

8. Verfahren nach Anspruch 7, **dadurch gekennzeichnet, dass** das Messen der Betriebstemperatur zur Prognose des Betriebsverhaltens in einem zusätzlichen Schritt bei Betrieb der Messvorrichtung mit gekühltem Messvorrichtungsfotovoltaikelement (1.1, 2.1, 3.1) erfolgt.

9. Verfahren nach einem der Ansprüche 7 oder 8, **dadurch gekennzeichnet, dass** die Auswahl des oder der Kühlelemente des oder der Fotovoltaikelemente der Fotovoltaikanlage unter Berücksichtigung des Typs und der Größe des oder der Fotovoltaikelemente der Fotovoltaikanlage erfolgt.

10. Verfahren nach einem der Ansprüche 1 bis 4, wobei das mindestens eine Fotovoltaikelement jeweils ein siliziumbasiertes Fotovoltaikelement ist, oder nach einem der Ansprüche 7 bis 9, wobei das mindestens eine Messvorrichtungsfotovoltaikelement (1.1, 2.1, 3.1) jeweils ein siliziumbasiertes Messvorrichtungsfotovoltaikelement (1.1, 2.1, 3.1) ist.

11. Verfahren nach Anspruch 10, **dadurch gekennzeichnet, dass** die kritische Temperatur ($T_c$) auf 35 °C festgelegt wird.

12. Verfahren nach Anspruch 10 oder 11, **dadurch gekennzeichnet, dass** die Effizienz (E) nach der Effizienzfunktion gemäß der Formel

$$\text{Effizienz} = 35 \cdot 10^3 \cdot e^{-75 \cdot \frac{\text{Betriebstempertur [K]}}{1956,15\,\text{K}}}$$

berechnet wird.

13. Messvorrichtung zur Durchführung des Verfahrens nach einem der Ansprüche 7 bis 9, **dadurch gekennzeichnet, dass** die Messvorrichtung mindestens ein kühlbares Messvorrichtungsfotovoltaikelement (1.1, 2.1, 3.1), jeweils thermisch kontaktiert mit einem Messvorrichtungstemperatursensor (1.3, 2.4, 3.5) und einem Messvorrichtungskühlelement (1.2, 2.2, 3.3, 3.4), sowie einen Messvorrichtungsglobalstrahlungssensor (9) zur Messung der Globalstrahlung (8) umfasst.

14. Messvorrichtung nach Anspruch 13, **dadurch gekennzeichnet, dass** das Messvorrichtungskühlelement (1.2, 2.2, 3.3, 3.4) eine Messvorrichtungskühlplatte (1.2) aus wärmeleitfähigem Metall, ein passiv oder aktiv betreibbares Messvorrichtungspeltierelement (2.2) und/oder ein ein flüssiges Messvorrichtungskühlmittel (3.4) beinhaltender Messvorrichtungskühlbehälter (3.3) ist.

15. Messvorrichtung nach Anspruch 13, **dadurch gekennzeichnet, dass** die Messvorrichtung drei Messvorrichtungsfotovoltaikelemente (1.1, 2.1, 3.1) umfasst, wobei das erste Messvorrichtungsfotovoltaikelement (1.1) mit einer Messvorrichtungskühlplatte (1.2) aus wärmeleitfähigem Metall, das zweite Messvorrichtungsfotovoltaikelement (1.2) mit einem passiv oder aktiv betreibbaren Messvorrichtungspeltierelement (2.2) und das dritte Messvorrichtungsfotovoltaikelement (1.3) mit einem in einem Messvorrichtungskühlbehälter (3.3) befindlichen flüssigen Messvorrichtungskühlmittel (3.4) thermisch kontaktiert ist.
- Es folgen vier Seiten Zeichnungen -

**Geänderte Patentansprüche gemäss Regel 137(2) EPÜ.**

1. Verfahren zur Steigerung des Wirkungsgrades einer Fotovoltaikanlage, aufweisend mindestens ein mittels eines thermisch kontaktierbaren Kühlelements temperierbares Fotovoltaikelement, **gekennzeichnet durch** die folgenden Schritte:

(1) Betreiben der Fotovoltaikanlage mit ungekühltem Fotovoltaikelement an einem vorgesehenen Betriebsstandort zur Analyse des Betriebsverhaltens, Messen der Betriebstemperatur des Fotovoltaikelements während dieses Analysebetriebs an der Rückseite des Fotovoltaikelements und Bestimmen der maximalen, während des Analysebetriebs aufgetretenen Betriebstemperatur ($T_{max}$) des ungekühlten Fotovoltaikelements,

(2) Bereitstellen einer Effizienzfunktion, die die Flächenleistungsdichte des Fotovoltaikelements bezogen auf den Wert der Globalstrahlung (8) als Funktion der Betriebstemperatur des Fotovoltaikelements angibt,

(3) Festlegen einer kritischen Temperatur ($T_c$) auf Basis einer vorgegebenen Mindesteffizienz und der Effizienzfunktion,

(4) Berechnung der voraussichtlichen maximalen Betriebstemperatur des gekühlten Fotovoltaikelements auf Basis der maximalen, während des Analysebetriebs aufgetretenen Betriebstemperatur ($T_{max}$) des ungekühlten Fotovoltaikelements unter Berücksichtigung einer Kühlwirkung verschiedener am Fotovoltaikelement kontaktierbarer Kühlelemente, umfassend eine Kühlplatte aus wärmeleitfähigem Metall, ein passiv oder aktiv betreibbares Peltierelement und/oder einen ein flüssiges Kühlmittel beinhaltenden Kühlbehälter,

(5) Berechnung der voraussichtlichen Gesamteffizienz des gekühlten Fotovoltaikelements auf Basis der Effizienzfunktion des ungekühlten Fotovoltaikelements unter Berücksichtigung der Effizienzsenkung oder -erhöhung durch das Kühlelement,

(6) Auswählen des Kühlelements, bei dem

- die voraussichtliche maximale Betriebstemperatur des gekühlten Fotovoltaikelements kleiner als die kritische Temperatur ($T_c$) ist, und
- die voraussichtliche Gesamteffizienz des gekühlten Fotovoltaikelements wenigstens 10 % über der nach der Effizienzfunktion am Punkt der kritischen Temperatur ($T_c$) vorliegenden Effizienz (E) liegt, und
- die voraussichtliche maximale Betriebstemperatur des gekühlten Fotovoltaikelements der kritischen Temperatur ($T_c$) am nächsten liegt,

(7) Montieren des ausgewählten Kühlelements am Fotovoltaikelement.

2. Verfahren nach Anspruch 1, **dadurch gekennzeichnet, dass** die Messung der Betriebstemperatur bei Analysebetrieb sowie die Berechnungen der voraussichtlichen maximalen Betriebstemperatur und der voraussichtlichen Gesamteffizienz des gekühlten Fotovoltaikelements in Abhängigkeit der Tageszeit erfolgen.

3. Verfahren nach Anspruch 1, **dadurch gekennzeichnet, dass** die Messung der Betriebstemperatur des ungekühlten Fotovoltaikelements und die Berechnung der voraussichtlichen Gesamteffizienz des gekühlten Fotovoltaikelements über einen Zeitraum von 24 Stunden erfolgen, wobei die Effizienzerhöhung aufgrund der Energieerzeugung des als Peltierelement ausgeführten Kühlelements während der Zeit ohne Sonneneinstrahlung berücksichtigt wird.

4. Verfahren nach einem der Ansprüche 1 bis 3, **dadurch gekennzeichnet, dass** die Bestimmung der Effizienzfunktion auf Basis von Daten der Flächenleistungsdichte des Fotovoltaikelements und der Werte der Globalstrahlung (8) erfolgt, die auf Basis der Messung der vom Fotovoltaikelement erzeugten elektrischen Leistung und/oder elektrischen Spannung sowie des mittels eines Globalstrahlungssensors gemessenen Wertes der Globalstrahlung (8) ermittelt werden.

5. Verfahren nach Anspruch 4, **dadurch gekennzeichnet, dass** ferner die Lufttemperatur, gemessen mittels eines Lufttemperatursensors, und die atmosphärische Extinktion, gemessen mittels eines Lidars, bei Bestimmung der Effizienzfunktion berücksichtigt werden.

6. Verfahren zur Steigerung des Wirkungsgrades einer Fotovoltaikanlage, aufweisend mindestens ein mittels eines thermisch kontaktierbaren Kühlelements temperierbares Fotovoltaikelement, unter Zuhilfenahme einer Messvorrichtung, aufweisend mindestens ein kühlbares Messvorrichtungsfotovoltaikelement (1.1, 2.1, 3.1), **gekennzeichnet durch** die folgenden Schritte:

(1) Betreiben der Messvorrichtung mit ungekühltem Messvorrichtungsfotovoltaikelement (1.1, 2.1, 3.1) an einem vorgesehenen Betriebsstandort der Fotovoltaikanlage zur Prognose des Betriebsverhaltens, Messen der Betriebstemperatur des Messvorrichtungsfotovoltaikelements (1.1, 2.1, 3.1) während dieses Prognosebetriebs an der Rückseite des Messvorrichtungsfotovoltaikelements (1.1, 2.1, 3.1) und Bestimmen der maximalen, während des Prognosebetriebs aufgetretenen Betriebstemperatur ($T_{max}$) des ungekühlten Messvorrichtungsfotovoltaikelements (1.1, 2.1, 3.1),

(2) Bereitstellen einer Effizienzfunktion, die die Flächenleistungsdichte des Messvorrichtungsfotovoltaikelements (1.1, 2.1, 3.1) bezogen auf den Wert der Globalstrahlung (8) als Funktion der Betriebstemperatur des Messvorrichtungsfotovoltaikelements (1.1, 2.1, 3.1) angibt,

(3) Festlegen einer kritischen Temperatur ($T_c$) auf Basis einer vorgegebenen Mindesteffizienz und der Effizienzfunktion,

(4) Berechnung der voraussichtlichen maximalen Betriebstemperatur des gekühlten Messvorrichtungsfotovoltaikelements (1.1, 2.1, 3.1) auf Basis der maximalen, während des Prognosebetriebs aufgetretenen Betriebstemperatur ($T_{max}$) des ungekühlten Messvorrichtungsfotovoltaikelements (1.1, 2.1, 3.1) unter Berücksichtigung einer Kühlwirkung verschiedener am Messvorrichtungsfotovoltaikelement (1.1, 2.1, 3.1) kontaktierbarer Messvorrichtungskühlelemente (1.2, 2.2, 3.3, 3.4), umfassend eine Messvorrichtungskühlplatte (1.2) aus wärmeleitfähigem Metall, ein passiv oder aktiv betreibbares Messvorrichtungspeltierelement (2.2) und/oder einen ein flüssiges Messvorrichtungskühlmittel (3.4) beinhaltenden Messvorrichtungskühlbehälter (3.3),

(5) Berechnung der voraussichtlichen Gesamteffizienz des gekühlten Messvorrichtungsfotovoltaikelements (1.1, 2.1, 3.1) auf Basis der Effizienzfunktion des Messvorrichtungsfotovoltaikelements (1.1, 2.1, 3.1) unter Berücksichtigung der Effizienzsenkung oder -erhöhung durch das Messvorrichtungskühlelement (1.2, 2.2, 3.3, 3.4),

(6) Auswählen des Messvorrichtungskühlelements (1.2, 2.2, 3.3, 3.4), bei dem

- die voraussichtliche maximale Betriebstemperatur des gekühlten Messvorrichtungsfotovoltaikelements (1.1, 2.1, 3.1) kleiner als die kritische Temperatur ($T_c$) ist, und
- die voraussichtliche Gesamteffizienz des gekühlten Messvorrichtungsfotovoltaikelements (1.1, 2.1, 3.1) wenigstens 10 % über der nach der Effizienzfunktion am Punkt der kritischen Temperatur ($T_c$) vorliegenden Effizienz (E) liegt, und
- die voraussichtliche maximale Betriebstemperatur des gekühlten Messvorrichtungsfotovoltaikelements (1.1, 2.1, 3.1) der kritischen Temperatur ($T_c$) am nächsten liegt,

(7) Montieren des Kühlelements am Fotovoltaikelement der Fotovoltaikanlage, wobei das Kühlelement typgleich zu dem des ausgewählten Messvorrichtungskühlelements (1.1, 2.1, 3.1) ist.

7. Verfahren nach einem der Ansprüche 6, **dadurch gekennzeichnet, dass** die Auswahl des oder der Kühlelemente des oder der Fotovoltaikelemente der Fotovoltaikanlage unter Berücksichtigung des Typs und der Größe des oder der Fotovoltaikelemente der Fotovoltaikanlage erfolgt.

8. Verfahren nach einem der Ansprüche 1 bis 3, wobei das mindestens eine Fotovoltaikelement jeweils ein siliziumbasiertes Fotovoltaikelement ist, oder nach einem der Ansprüche 6 bis 7, wobei das mindestens eine Messvorrichtungsfotovoltaikelement (1.1, 2.1, 3.1) jeweils ein siliziumbasiertes Messvorrichtungsfotovoltaikelement (1.1, 2.1, 3.1) ist.

9. Verfahren nach Anspruch 8, **dadurch gekennzeichnet, dass** die kritische Temperatur ($T_c$) auf 35 °C festgelegt wird.

10. Verfahren nach Anspruch 8 oder 9, **dadurch gekennzeichnet, dass** die Effizienz (E) nach der Effizienzfunktion gemäß der Formel

$$\text{Effizienz} = 35 \cdot 10^3 \cdot e^{-75 \cdot \frac{\text{Betriebstempertur [K]}}{1956,15\,K}}$$

berechnet wird.

FIG. 1

FIG. 2

FIG. 3

FIG. 4

FIG. 5

FIG. 6

Europäisches
Patentamt

European
Patent Office

Office européen
des brevets

# EUROPÄISCHER RECHERCHENBERICHT

Nummer der Anmeldung

EP 19 16 5914

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | LAYTH MOHSIN ET AL: "Optimized cleaning and cooling for photovoltaic modules based on the output performance", THERMAL SCIENCE, Bd. 22, Nr. 1 Part A, 1. Januar 2018 (2018-01-01), Seiten 237-246, XP055617075, RS ISSN: 0354-9836, DOI: 10.2298/TSCI151004145M * das ganze Dokument * | 13-15 | INV. H02S40/42 H02S50/00 |
| X | Adam Palumbo: "Design and Analysis of Cooling Methods for Solar Panels", , 1. Januar 2013 (2013-01-01), XP055616988, DOI: 10.13140/RG.2.2.23802.08643 Gefunden im Internet: URL:https://www.researchgate.net/profile/Adam_Palumbo2/publication/312576495_Design_and_Analysis_of_Cooling_Methods_for_Solar_Panels/links/58823316a6fdcc6b790eb069/Design-and-Analysis-of-Cooling-Methods-for-Solar-Panels.pdf * Seiten 44-49 * * Seiten 54-62 * * Seiten 17-23 * | 13-15 | |
| X | SWAR A. ZUBEER ET AL: "A review of photovoltaic cells cooling techniques", E3S WEB OF CONFERENCES, Bd. 22, 1. Januar 2017 (2017-01-01), Seite 00205, XP055617046, DOI: 10.1051/e3sconf/20172200205 * das ganze Dokument * | 13-15 | |
| A | | 1-12 | |

RECHERCHIERTE SACHGEBIETE (IPC)

H02S

Der vorliegende Recherchenbericht wurde für alle Patentansprüche erstellt

| Recherchenort | Abschlußdatum der Recherche | Prüfer |
|---|---|---|
| Berlin | 2. September 2019 | Voignier, Vincent |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument

 ......................................................................
& : Mitglied der gleichen Patentfamilie, übereinstimmendes
     Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004002900 A1
- DE 102007055462 A1
- DE 102016116700 A1